# EUROPEAN PATENT APPLICATION

(11) **EP 4 675 978 A1**
(43) Date of publication of application: **07.01.2026**
(21) Application number: 24763171.6
(22) Date of filing: 28.02.2024
(51) Int. Cl.: H04L 9/40, H04L 67/10, G06F 21/60

(54) **ACCESS CONTROL METHOD BASED ON CLOUD COMPUTING TECHNOLOGY, AND RELATED APPARATUS**

(30) Priority: 28.02.2023 CN 202310179512
(71) Applicant: Huawei Cloud Computing Technologies Co., Ltd., Guiyang, Guizhou 550025 (CN)
(72) Inventor: LIN, Weibo, Guiyang, Guizhou 550025 (CN); LI, Jun, Guiyang, Guizhou 550025 (CN); JING, Tangjun, Guiyang, Guizhou 550025 (CN)
(74) Representative: Körber, Martin Hans
(86) International application number: PCT/CN2024/078905
(87) International publication number: WO 2024/179490

(57) **Abstract**

This application provides a cloud computing technology-based access control method and a related apparatus, applied to a cloud management platform. The method includes: The cloud management platform obtains and records a first access control policy configured by an administrator, where configuration of the first access control policy includes configuring at least one piece of first request attribute information, and the first request attribute information includes a first request attribute; the cloud management platform obtains a first access request triggered by a user, where the first access request carries a target request attribute; and the cloud management platform detects whether the target request attribute matches the first request attribute, to obtain a first matching result. In this way, the access control policy can be flexibly configured, so that the access control policy can adapt to complex and changeable scenarios. An effective condition of the access control policy is set to a request attribute. Therefore, the cloud management platform can conveniently and accurately index the access control policy that needs to take effect. In this way, efficiency of verifying the access request according to the access control policy is improved.

## Description

This application claims priority to Chinese Patent Application No. CN202310179512.8, filed with the China National Intellectual Property Administration on February 28, 2023 and entitled "CLOUD COMPUTING TECHNOLOGY-BASED ACCESS CONTROL METHOD, AND RELATED APPARATUS", which is incorporated herein by reference in its entirety.

### TECHNICAL FIELD

This application relates to the field of computer technologies, and in particular, to a cloud computing technology-based access control method and a related apparatus.

### BACKGROUND

A cloud system may provide, for a consumer, a resource like a network, network bandwidth, a server, storage, or an application as a service. In the cloud system, security is usually ensured according to an access control policy. Specifically, the access control policy (Policy) is configured to ensure that an operation or access of a subject (for example, a user or a terminal device) on an object (for example, a cloud resource) in the cloud system complies with the access control policy, to avoid resource abuse and data leakage.

Access control policies may be mainly classified into a discretionary access control (Discretionary Access Control, DAC) policy and a mandatory access control (Mandatory Access Control, MAC) policy. The discretionary access control policy is used to grant permission to a user, so that the user can access or operate a resource. The mandatory access control policy is used to set a permission boundary. After receiving a request of the user, the cloud system first verifies the request of the user according to the mandatory access control policy. If the verification succeeds, the user needs authorization from the discretionary access control policy. If the verification fails, the cloud system directly denies the request of the user.

Currently, common cloud computing technology-based access control methods include a plurality of configuration methods such as an organization service control policy (Organization Service Control Policy), an organization tag policy (Organization Tag Policy), a virtual private cloud (Virtual Private Cloud, VPC) endpoint policy (endpoint policy), or a permission boundary (Permission Boundary). The organization service control policy is used as an example. In the organization service control policy, an access control policy needs to be bound to an organization, an organizational unit (Organizational Unit), or an account. The applicant finds through research that configuration of the access control policy is customized. After an access control policy is configured, the access control policy is applicable to only bound objects (an organization, an organizational unit, or an account). When the access control policy needs to be applied to another object, the access control policy needs to be reconfigured. As a result, the foregoing method has problems such as complex configuration and low efficiency.

### SUMMARY

According to a first aspect, an embodiment of this application provides a cloud computing technology-based access control method. The method is applied to a cloud management platform, the cloud management platform is used to manage an infrastructure, the infrastructure includes at least one cloud data center, a plurality of servers are disposed in each cloud data center, and the method includes: The cloud management platform obtains and records a first access control policy configured by an administrator, where configuration of the first access control policy includes configuring at least one piece of first request attribute information, and the first request attribute information includes one or any combination of a first request attribute, an expected value of the first request attribute, and a matching manner of the first request attribute; the cloud management platform obtains a first access request triggered by a user, where the first access request carries a target request attribute; and the cloud management platform detects whether the target request attribute matches the first request attribute, to obtain a first matching result.

Specifically, the request attribute information is various types of context attribute information associated with an access request.

In this embodiment of this application, the request attribute information is bound to the access control policy. When a request attribute carried in the access request matches the request attribute information bound to the access control policy, the access request is verified according to the access control policy. In this way, the access control policy can be flexibly configured, so that the access control policy can adapt to complex and changeable scenarios. An effective condition of the access control policy is set to the request attribute. Therefore, the cloud management platform can conveniently and accurately index the access control policy that needs to take effect. In this way, efficiency of verifying the access request according to the access control policy is improved.

With reference to the first aspect, in a possible implementation, the cloud management platform allows or denies the first access request based on the first matching result and the first access control policy recorded by the cloud management platform.

Specifically, when the first matching result indicates that the target request attribute matches the first request attribute, the cloud management platform verifies the first access request according to the first access control policy. A verification result indicates that the first access request is allowed, or the verification result indicates that the first access request is denied.

When the first matching result indicates that the target request attribute does not match the first request attribute, the cloud management platform continues to search for another access control policy that matches the target request attribute (a purpose is to find an access control policy whose request attribute matches the target request attribute). When the cloud management platform cannot find an access control policy that matches the target request attribute (the first access request), the cloud management platform denies the first access request.

With reference to the first aspect, in a possible implementation, the cloud management platform obtains and records a second access control policy configured by the administrator, where configuration of the second access control policy includes configuring at least one piece of second request attribute information, and the second request attribute information includes one or any combination of a second request attribute, an expected value of the second request attribute, and a matching manner of the second request attribute; and the cloud management platform detects whether the target request attribute matches the second request attribute, to obtain a second matching result.

Specifically, the cloud management platform may further configure a plurality of access control policies. In a process of verifying the first access request triggered by the user, the cloud management platform may further detect whether a request attribute associated with each of the plurality of access control policies matches the target request attribute. According to the foregoing method, implementation flexibility of configuration of the access control policy is improved, and reliability of authentication on the first access request triggered by the user is improved.

With reference to the first aspect, in a possible implementation, the cloud management platform allows or denies the first access request based on the first matching result, the first access control policy recorded by the cloud management platform, the second matching result, and the second access control policy recorded by the cloud management platform.

Specifically, the cloud management platform may further perform authentication matching on the target request attribute according to a plurality of access control policies that match the target request attribute. Then, whether the first access request is allowed or denied is determined based on a matching result between the target request attribute and each of the plurality of access control policies that match the target request attribute. That the plurality of access control policies match the target request attribute means that the request attribute included in the access control policy matches the target request attribute (the request attribute carried in the first access request). For example, the plurality of access control policies that match the target request attribute include the first access control policy and the second access control policy. The cloud management platform allows or denies the first access request based on the first matching result (a matching result between the target request attribute and the first request attribute included in the first access control policy), the first access control policy, the second matching result (a matching result between the target request attribute and the second request attribute included in the second access control policy), and the second access control policy. According to the foregoing method, flexibility of configuration of the access control policy is improved, and reliability of authentication on the first access request triggered by the user is improved.

With reference to the first aspect, in a possible implementation, that the cloud management platform detects whether the target request attribute matches the first request attribute, to obtain the first matching result specifically includes: The cloud management platform extracts the target request attribute from the first access request; and the cloud management platform matches the expected value of the first request attribute with a value of the target request attribute based on the matching manner of the first request attribute, to obtain the first matching result.

Specifically, in a process in which the cloud management platform performs authentication on the first access request according to the first access control policy, the cloud management platform extracts the target request attribute from the first access request. Then, the expected value of the first request attribute and the value of the target request attribute are matched with each other based on the matching manner that is of the first request attribute and that is included in the first access control policy, to obtain the first matching result. In a process of configuring an access control policy, a matching rule for an access request may be set by configuring a matching manner of a request attribute and an expected value of the request attribute, to improve configuration convenience.

With reference to the first aspect, in a possible implementation, the matching manner includes one or any combination of fuzzy string matching, exact string matching, address range determining, and value comparison. In other words, a plurality of matching manners may be simultaneously configured for the access control policy. When the plurality of matching manners are configured for the access control policy, the target request attribute of the access request needs to meet all matching rules indicated by the plurality of matching manners configured for the access control policy, so that the access request can be verified according to the access control policy.

With reference to the first aspect, in a possible implementation, the first access control policy includes a field of a request attribute, a field of an expected value of the request attribute, a field of a value of the request attribute, a field of a matching manner, a field of an effect, and/or a field of a request type, where the field of the request attribute is used to identify a request attribute of the first access request, the field of the expected value of the request attribute is used to match the expected value of the request attribute with the value of the request attribute, the field of the effect is used to identify whether the first access request is allowed or denied, and the field of the request type is used to identify a request type of the first access request.

Specifically, the access control policy in this embodiment of this application may include a plurality of fields, to implement a plurality of functions of the access control policy. For example, the cloud management platform provides an interface related to a cloud computing service, for example, a configuration page or an application programing interface (Application Programing Interface, API), for an administrator to configure an access control policy. The administrator may intuitively configure a plurality of fields of the access control policy on the interface, to implement a plurality of functions of the access control policy. This improves convenience of configuring an access control policy.

With reference to the first aspect, in a possible implementation, the request attribute includes one or any combination of a user identifier ID, a user identity, an ID of an organization to which the user belongs, a location path of the user in the organization, a tag carried by the user, a user identity type, whether multi-factor authentication on the user identity succeeds, an identity and access management identifier IAM ID of the user, a name of a client application of the user, an identifier of a resource requested to be accessed, an ID of an organization to which the resource requested to be accessed belongs, a location path of the resource requested to be accessed in the organization, an ID of an account to which the resource requested to be accessed belongs, a source internet protocol IP address of a request, a source virtual private cloud VPC of the request, a VPC endpoint through which the request passes, whether the request is forwarded by a cloud service, a cloud service forwarding link of the request, or whether the request is sent through a secure sockets layer SSL. In this embodiment of this application, the access control policy may support verification of a plurality of request attributes of the access request, to improve implementation flexibility of the solution.

With reference to the first aspect, in a possible implementation, before the cloud management platform obtains and records the first access control policy configured by the administrator, the method further includes: The cloud management platform obtains a plurality of registration requests that carry different user accounts; the cloud management platform separately registers and records a plurality of user accounts based on the plurality of registration requests, where the plurality of user accounts include an account of the administrator; and the cloud management platform assigns configuration permission of the first access control policy to the account of the administrator.

Specifically, the cloud management platform may alternatively register a plurality of user accounts. In addition, the cloud management platform may further assign different permission to a plurality of user accounts. For example, some user accounts are set as the account of the administrator. In other words, administrator permission is assigned to the user accounts. Further, the cloud management platform may further configure a configuration policy of each access control policy in a customized manner, that is, configure user accounts that have the permission to configure the access control policy. For example, configuration permission of the first access control policy is assigned to the account of the administrator. Further, the cloud management platform may further split configuration permission of the access control policy. For example, the access control policy may be used for authentication at a first configuration permission level, the access control policy may be modified at a second configuration permission level, and the access control policy may be deleted at a third configuration permission level. In the foregoing manner, the access control policy is configured in a customized manner, user experience is improved, and security of the cloud management platform is ensured.

According to a second aspect, an embodiment of this application provides a cloud management platform, where the cloud management platform is used to manage an infrastructure, the infrastructure includes at least one cloud data center, a plurality of servers are disposed in each cloud data center, and the cloud management platform includes:
a policy configuration module, configured to obtain and record a first access control policy configured by an administrator, where configuration of the first access control policy includes configuring at least one piece of first request attribute information, and the first request attribute information includes one or any combination of the first request attribute, an expected value of the first request attribute, and a matching manner of the first request attribute; an access request obtaining module, configured to obtain a first access request triggered by a user, where the first access request carries a target request attribute; and an authentication module, configured to detect whether the target request attribute matches the first request attribute, to obtain a first matching result.

In a possible implementation, the cloud management platform further includes: a permission control module, configured to allow or deny the first access request based on the first matching result and the first access control policy recorded by the cloud management platform.

In a possible implementation, the policy configuration module is configured to: obtain and record a second access control policy configured by the administrator, where configuration of the second access control policy includes configuring at least one piece of second request attribute information, and the second request attribute information includes one or any combination of a second request attribute, an expected value of the second request attribute, and a matching manner of the second request attribute; and the authentication module is further configured to detect whether the target request attribute matches the second request attribute, to obtain a second matching result.

In a possible implementation, the permission control module is further configured to: allow or deny the first access request based on the first matching result, the first access control policy recorded by the cloud management platform, the second matching result, and the second access control policy recorded by the cloud management platform.

In a possible implementation, the authentication module is specifically configured to extract the target request attribute from the first access request; and the authentication module is further configured to match the expected value of the first request attribute with a value of the target request attribute based on the matching manner of the first request attribute, to obtain the first matching result.

In a possible implementation, the matching manner includes one or any combination of fuzzy string matching, exact string matching, address range determining, and value comparison.

In a possible implementation, the first access control policy includes a field of a request attribute, a field of an expected value of the request attribute, a field of a value of the request attribute, a field of a matching manner, a field of an effect, and/or a field of a request type, where the field of the request attribute is used to identify a request attribute of the first access request, the field of the expected value of the request attribute is used to match the expected value of the request attribute with the value of the request attribute, the field of the effect is used to identify whether the first access request is allowed or denied, and the field of the request type is used to identify a request type of the first access request.

In a possible implementation, the request attribute includes one or any combination of a user identifier ID, a user identity, an ID of an organization to which the user belongs, a location path of the user in the organization, a tag carried by the user, a user identity type, whether multi-factor authentication on the user identity succeeds, an identity and access management identifier IAM ID of the user, a name of a client application of the user, an identifier of a resource requested to be accessed, an ID of an organization to which the resource requested to be accessed belongs, a location path of the resource requested to be accessed in the organization, an ID of an account to which the resource requested to be accessed belongs, a source internet protocol IP address of a request, a source virtual private cloud VPC of the request, a VPC endpoint through which the request passes, whether the request is forwarded by a cloud service, a cloud service forwarding link of the request, or whether the request is sent through a secure sockets layer SSL.

In a possible implementation, the cloud management platform further includes: a registration module, configured to obtain a plurality of registration requests that carry different user accounts, where the registration module is further configured to: separately register and record a plurality of user accounts based on the plurality of registration requests, where the plurality of user accounts include an account of the administrator; and the registration module is further configured to allocate configuration permission of the first access control policy to the account of the administrator.

According to a third aspect, an embodiment of this application provides a computing device including at least one computing device. Each computing device includes a processor and a memory, and the processor of the at least one computing device is used to execute instructions stored in the memory of the at least one computing device, so that the computing device cluster performs any possible method according to the first aspect.

According to a fourth aspect, an embodiment of this application provides a computer program product including instructions. When the instructions are run by a computing device cluster, the computing device cluster is enabled to perform any possible method according to the first aspect.

According to a fifth aspect, an embodiment of this application provides a computer-readable storage medium, including computer program instructions. When the computer program instructions are executed by a computing device cluster, the computing device cluster is enabled to perform any possible method according to the first aspect.

According to a sixth aspect, an embodiment of this application provides a chip system. The chip system includes a processor and an interface circuit, used to support a computing device in implementing functions in the foregoing aspects, for example, sending or processing data and/or information in the foregoing methods. In a possible design, the chip system further includes a memory. The memory is used to store program instructions and data that are necessary for the network device. The chip system may include a chip, or may include a chip and another discrete component.

According to a seventh aspect, this application provides a server, including a memory and a processor. The memory stores executable code, and the processor executes the executable code to implement any possible method according to the first aspect of this application.

### BRIEF DESCRIPTION OF DRAWINGS

FIG. 1 is a diagram of an organization service control policy;
FIG. 2 is a diagram of an architecture of a system of a cloud computing technology-based access control method according to an embodiment of this application;
FIG. 3 is a diagram of a cloud management platform 20 according to an embodiment of this application;
FIG. 4 is a schematic flowchart of a cloud computing technology-based access control method according to an embodiment of this application;
FIG. 5 is a diagram of a configuration interface of a first menu according to an embodiment of this application;
FIG. 6 is a schematic flowchart of determining a to-be-matched access control policy according to an embodiment of this application;
FIG. 7 shows a cloud computing technology-based access control method according to an embodiment of this application;
FIG. 8 is a diagram of an access control policy according to an embodiment of this application;
FIG. 9 is a diagram of another access control policy according to an embodiment of this application;
FIG. 10 is a diagram of another access control policy according to an embodiment of this application;
FIG. 11 is a diagram of an application scenario according to an embodiment of this application;
FIG. 12 is a diagram of a structure of a cloud management platform 20 according to an embodiment of this application;
FIG. 13 is a diagram of a structure of a computing device 1300 according to an embodiment of this application;
FIG. 14 is a diagram of a structure of a computing device cluster according to an embodiment of this application;
FIG. 15 is a diagram of another structure of a computing device cluster according to an embodiment of this application; and
FIG. 16 is a diagram of an access control policy according to an embodiment of this application.

### DESCRIPTION OF EMBODIMENTS

The following describes some example implementations of the present disclosure in more detail with reference to accompanying drawings. Although some example implementations of the present disclosure are shown in the accompanying drawings, it should be understood that the present disclosure may be implemented in various forms and should not be limited by the example implementations described herein. Instead, these implementations are provided to make the present disclosure more thorough and complete and to fully convey the scope of the present disclosure to a person skilled in the art.

A term "include" and variants thereof used in this specification indicate open inclusion, that is, "include but is not limited to". Unless otherwise stated, a term "or" means "and/or". A term "based on" indicates "at least partially based on". Terms "embodiments" and "some embodiments" both indicate "at least some embodiments". Descriptions of terms such as "first" and "second" are used to distinguish different objects and the like, do not indicate a sequence, and do not impose a limitation that "first" and "second" are different types.

First, some concepts in embodiments of this application are described.

A cloud technology (cloud technology) is a hosting service that unifies a series of resources such as hardware, software, and a network in a wide area network or a local area network to implement data computing, storage, processing, and sharing.

A public cloud (public cloud) is a cloud that can be used by a user and that is provided by a third-party provider. Generally, the public cloud can be used through a network, can provide a plurality of cloud resources, and can provide a service in an entire open public network.

Private cloud (private cloud): A cloud infrastructure and software and hardware resources are created in a firewall, so that a mechanism or each department of an enterprise shares resources in a data center. The private cloud is a cloud infrastructure that operates for a specific organization. A manager may be the organization or a third party. The manager may be located inside the organization or outside the organization.

A hybrid cloud (hybrid cloud) is a cloud computing environment including a private cloud resource and a public cloud resource.

An access control policy is a policy that restricts an operation or access of a subject (for example, a terminal device, also referred to as a user, or a user) to an object (for example, a resource in a cloud service), to avoid resource abuse and data leakage. The access control policy can ensure that a request of a user takes effect only when the user has corresponding permission, so that a resource of a specified cloud service can be obtained only by a specified terminal, and a specified cloud service action can be accessed only by the specified terminal, to ensure access security. An administrator can configure an access control policy for an account in a cloud service like identity management or organization management, and restrict, according to the access control policy, operation permission of another user in the account on cloud resources.

For example, the access control policy may be a constraint set described by using a domain specific language (domain specific language, DSL). The access control policy may accurately describe a resource set, an operation set, and an allow condition or a deny condition that are allowed or denied for access. The access control policy may also be referred to as an ACP for short. The ACP includes a field of a cloud resource identifier (Resource), a field of an effect (Effect), and a field of a request type (Action). The field of the cloud resource identifier is used to identify a target cloud resource, the field of the effect is used to identify whether access to the target cloud resource is denied or allowed, and the field of the request type is used to identify a request type of an access request. Optionally, the ACP may further include another field, for example, a field of a condition (Condition). The field of the condition indicates a restriction condition for a constraint to take effect.

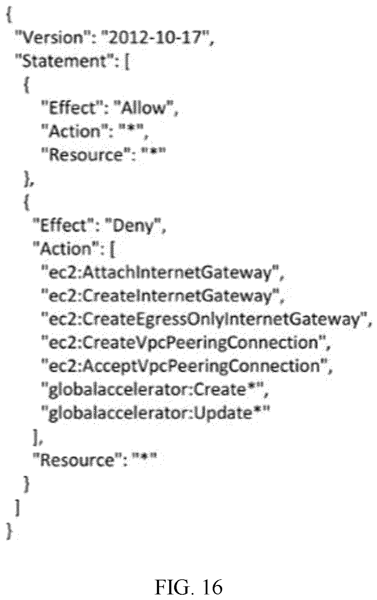

FIG. 16 is a diagram of an access control policy according to an embodiment of this application. A plurality of fields of the access control policy (ACP) may include Version, Statement, Effect, Action, Resource, and the like. Each field corresponds to a policy element in the ACP. The following describes each field in the ACP.

Version is an optional policy element (sting). For example, "Version": "2012-10-17" indicates a version of an ACP document. An ACP document version of a cloud service provider may have only one value, that is, 2012-10-17. If there is no Version element in the ACP, a default value of the ACP document version is 2012-10-17.

Statement is a mandatory element (array), for example, "Statement": [{...},{...},{...}]. Statement is a main element of the policy and is used to describe a specific constraint rule. Each Statement element may include a plurality of statements, and each statement is enclosed by {}.

Effect is a mandatory element (sting), for example, "Effect": "Deny". Effect is a component element of the constraint rule of Statement, each constraint rule needs to include the element, and the element has only two values: Allow or Deny, which respectively represents "explicit authorization" and "explicit deny".

Action: is a mandatory element (String), for example, "Action": "ec2:AttachInternetGateway". The action is a component element of the constraint rule of the statement, and each constraint rule needs to include the element. A value includes two parts: service-name and action-name. The service-name is a namespace (for example, ec2 in FIG. 16) of a cloud service, and the action-name is an operation name (for example, AttachInternetGateway in FIG. 16) of each product. The values of the service-name and the action-name are case insensitive, and the operation name may include a wildcard character (*).

Resource is a mandatory element (String). * may indicate all resource objects, and may further be used to specifically limit a resource scope and a project to which a resource belongs, for example, "*" in FIG. 16.

It should be noted that when an SCP contains both Allow (allow) and Deny (deny) constraint statements, the Deny overrides the Allow.

When policy calculation (or referred to as verification, or referred to as authentication, or the like) is performed on the access request and the ACP corresponding to the access request, if all effects of the policy corresponding to the access request are Allow, a calculation result is true (that is, access is allowed, and it is considered that the verification succeeds), and authentication succeeds (or referred to as that the verification succeeds). If the policy includes an effect Deny, a calculation result is false (that is, access is denied, and it is considered that the verification fails), and authentication fails (or referred to as that the verification fails).

The ACP shown in FIG. 16 is used as an example to describe verification performed by the ACP on an access request. Main elements of a Statement policy in the ACP are respectively "Effect": "Deny" and "Action": "ec2:AttachInternetGateway." "ec2:CreateInternetGateway"; "golobalaccelerator:Update". It indicates that the access request is allowed to access all resources only after verification of the ACP on the access request succeeds.

Access control policies may be mainly classified into a discretionary access control (Discretionary Access Control, DAC) policy and a mandatory access control (Mandatory Access Control, MAC) policy. The discretionary access control policy is used to grant permission to a user, so that the user can access or operate a resource. The mandatory access control policy is used to set a permission boundary. After receiving a request of a user, the cloud system first verifies the request of the user according to the mandatory access control policy. If the verification succeeds, the user needs authorization from the discretionary access control policy. If the verification fails, the cloud system directly denies the request of the user.

It should be noted that the access control policy may also have another name, for example, an access control rule, an access control capability, a service control policy, a permission boundary, an authentication rule, or an authentication policy. This is not limited in embodiments of this application.

An access request in embodiments of this application is an instruction invoked by a user for a cloud service or a resource request in the cloud service. For example, the access request is an application programming interface (Application Programming Interface, API) access request.

A service control policy (service control policy, SCP) is a mandatory access control policy that applies to an identity in an organization in an organization service.

A resource control policy (resource control policy, RCP) is a mandatory access control policy that applies to a resource in an organization in an organization service.

Cloud management platform and infrastructure: The cloud management platform is used to manage an infrastructure of a cloud vendor. The infrastructure is a plurality of cloud data centers disposed in different areas, where at least one cloud data center is disposed in each area. The cloud management platform may provide an interface related to a cloud computing service, for example, a configuration page or an application programming interface (Application Programing Interface, API) for a tenant to access a cloud service. The tenant may log in to the cloud management platform by using a pre-registered account and password, and after the login succeeds, the tenant selects and purchases a cloud service provided by a cloud data center in a predetermined area. The cloud service is, for example, an object storage service, a virtual machine service, a container services, or another known cloud service.

A tenant is a top-level object used to manage a cloud service and/or a cloud resource. The tenant registers a tenant account and sets a tenant password on the cloud management platform through a local client (for example, a browser). The local client remotely logs in to the cloud management platform by using the tenant account and the set tenant password. The cloud management platform provides a configuration page or an API for the tenant to configure and use a cloud service. The cloud service is specifically provided by the infrastructure managed by the cloud management platform.

An embodiment of this application provides an access control method. The access control method may be applied to any IT system (for example, a public cloud system, a private cloud system, or a hybrid cloud system) that needs to perform organizational management on resources and unified permission control. In the access control method, an intra-organization resource, a virtual instance provided by a cloud management platform, or a cloud service provided by the cloud management platform are used as an action object of an organization management and control policy, to control an intra-organization resource to deny access by an external identity, so as to ensure security of organization resources.

The following uses the public cloud system as an example to describe in detail a specific implementation of the access control method provided in embodiments of this application. Another IT system is similar to the public cloud system. For brevity, details are not described.

It may be understood that when the access control method provided in embodiments of this application is applied to the public cloud system, the access control method may also be referred to as a cloud computing technology-based access control method.

Currently, common cloud computing technology-based access control policies include a plurality of methods such as an organization service control policy (Organization Service Control Policy), an organization tag policy (Organization Tag Policy), a virtual private cloud (Virtual Private Cloud, VPC) endpoint policy (endpoint policy), or a permission boundary (Permission Boundary).

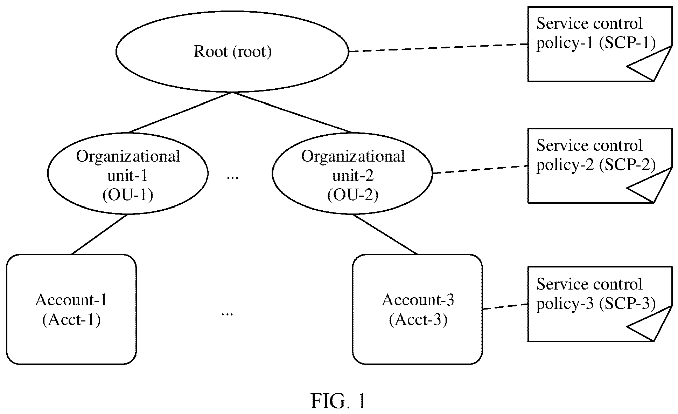

An organization service control policy is used as an example. FIG. 1 is a diagram of an organization service control policy. In the organization service control policy, a service control policy (Service Control Policy, SCP) needs to be bound to an organization (organization), an organizational unit (Organizational Unit), or an account (account). For example, as shown in FIG. 1, a service control policy-1 (SCP-1) is configured for an entire organization, that is, a root (root) in FIG. 1. The SCP-1 restricts all lower-level accounts of the root. API requests initiated by users of all lower-level accounts of the root can successfully access the root only after being verified by the SCP-1. An SCP-2 is configured for an organizational unit-2 (OU-2) of the root. The SCP-2 restricts all lower-level accounts of the organizational unit-2. API requests initiated by users of all lower-level accounts of the OU-2 can successfully access the OU-2 only after being verified by the SCP-1 and the SCP-2. An SCP-3 is configured for a lower-level account "account-3 (acct-3)" of the OU-2. API requests initiated by users of all lower-level accounts of the account-3 can successfully access the account-3 only after being verified by the SCP-1, the SCP-2, and the SCP-3.

The applicant finds through research that configuration of the access control policy is customized. After an access control policy is configured, the access control policy is applicable to only bound objects (an organization, an organizational unit, or an account). When the access control policy needs to be applied to another object, the access control policy needs to be reconfigured. As a result, the foregoing method has problems such as complex configuration and low efficiency.

Based on this, an embodiment of this application provides a cloud computing technology-based access control method, to bind request attribute information to an access control policy. When a request attribute carried in an access request matches the request attribute information bound to the access control policy, the access request is verified according to the access control policy. In this way, the access control policy can be flexibly configured, so that the access control policy can adapt to complex and changeable scenarios. An effective condition of the access control policy is set to the request attribute. Therefore, the cloud management platform can conveniently and accurately index the access control policy that needs to take effect. In this way, efficiency of verifying the access request according to the access control policy is improved.

Specific implementations of the cloud computing technology-based access control method and a cloud management platform apparatus provided in embodiments of this application are described in detail below with reference to the accompanying drawings.

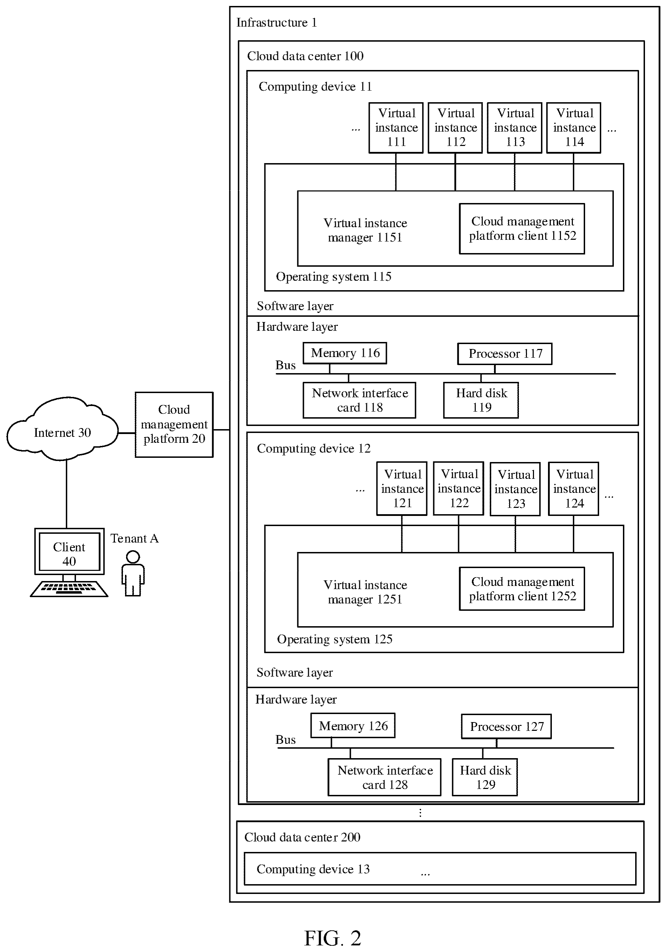

FIG. 2 is a diagram of an architecture of a system to which a cloud computing technology-based access control method according to an embodiment of this application can be applied. As shown in FIG. 2, the system includes a cloud management platform 20 and an infrastructure 1. A tenant A may log in to the cloud management platform 20 through a client 40 over the Internet 30 by using an account and a password that are pre-registered on the cloud management platform 20, and manage a cloud resource in the infrastructure 1 through the cloud management platform 20. The tenant A may deploy an access control service for the cloud resource in the infrastructure 1 on the cloud management platform 20. The infrastructure 1 includes a plurality of computing devices. For example, the infrastructure 1 includes a computing device 11, a computing device 12, ..., and a computing device 13. For example, the computing device 11 includes a hardware layer and a software layer. The hardware layer includes a memory 116, a processor 117, a network interface card 118, and a hard disk 119. The software layer includes virtual instances 111, 112, 113, 114, ..., and an operating system 115 of the computing device 11. The operating system 115 includes a virtual instance manager 1151 and a cloud management platform client 1152. The virtual instance manager 1151 is used to manage a plurality of virtual instances, and communicate with the cloud management platform 20 through the cloud management platform client 1152. It should be noted that in this embodiment of this application, there may be one or more computing devices in the infrastructure, and there may be one or more cloud resources in the computing device. This is not limited in this embodiment of this application.

For example, the infrastructure 1 includes at least one cloud data center, for example, a cloud data center 100 and a cloud data center 200 in FIG. 2. A plurality of computing devices are disposed in each cloud data center. For example, a computing device 11 and a computing device 12 are disposed in the cloud data center 100, and a computing device 13 is disposed in the cloud data center 200. One or any combination of the plurality of virtual instances is deployed in at least one computing device of the infrastructure 1. For example, the virtual instance 111, the virtual instance 112, the virtual instance 113, and the virtual instance 114 are deployed in the computing device 11. A virtual instance 121, a virtual instance 122, a virtual instance 123, and a virtual instance 124 are deployed in the computing device 12. A plurality of cloud resources of a tenant may be set in an organization.

The computing device 11, the computing device 12, and the computing device 13 may be servers. The server may be an independent physical server, or may be a server cluster including a plurality of physical servers or a distributed system. The server provides various cloud services, for example, basic cloud computing services such as a cloud database, cloud computing, and cloud storage.

The server involved in this solution may be a hardware server, or may be embedded in a virtualization environment. For example, the server involved in this solution may be a virtual machine executed on a hardware server including one or more other virtual machines.

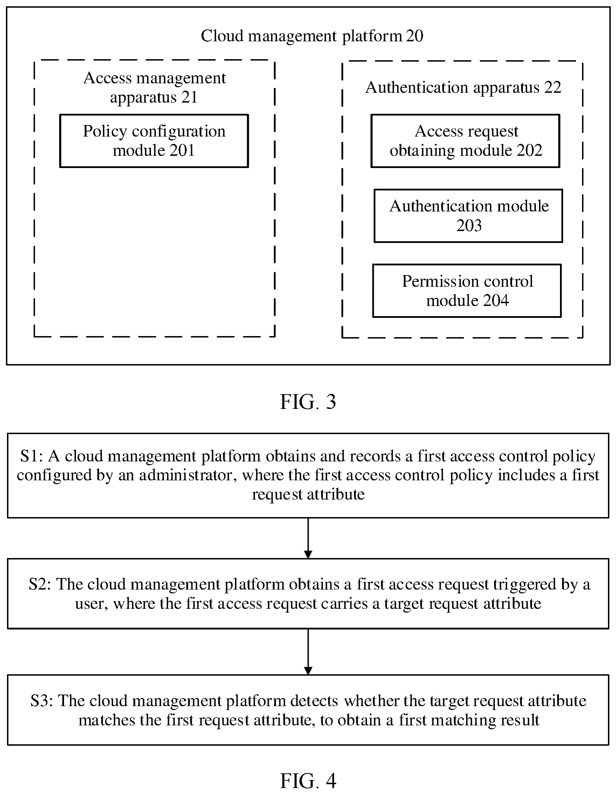

In the following, in an example, the cloud management platform provided in the embodiments of this application is obtained through division based on functions. FIG. 3 is a diagram of a cloud management platform 20 according to an embodiment of this application. The cloud management platform 20 provided in an embodiment of this application includes a policy configuration module 201, an access request obtaining module 202, an authentication module 203, and a permission control module 204.

Specifically, the policy configuration module 201 is configured to obtain and record an access control policy.

The access request obtaining module 202 is configured to obtain an access request triggered by a user.

The authentication module 203 is configured to detect whether a target request attribute carried in the access request matches a request attribute carried in the access control policy, to obtain a matching result.

The permission control module 204 is configured to allow or deny the access request based on the matching result and the access control policy, where the matching result indicates whether to perform further authentication on the access request according to the access control policy. An authentication result obtained by performing authentication on the access request according to the access control policy indicates that the access request is allowed or the access request is denied.

It should be noted that the policy configuration module 201, the access request obtaining module 202, the authentication module 203, and the permission control module 204 may be separately implemented by one or more cloud services, or may be jointly implemented by one or more cloud services, or may be distributed on different servers, or may be implemented by different modules in the server. This is not limited in embodiments of this application. It may be understood that the policy configuration module 201, the access request obtaining module 202, the authentication module 203, and the permission control module 204 may be separately implemented by one or more cloud services, or may be jointly implemented by one or more cloud services, or may be distributed on different servers, or may be implemented by different modules in the server. This is not limited in embodiments of this application.

In a possible example, the policy configuration module 201 is implemented as an access management apparatus 21, and the access management apparatus 21 is used to configure and deliver an access control policy.

In still another possible example, the access request obtaining module 202, the authentication module 203, and the permission control module 204 are implemented as an authentication apparatus 22. The authentication apparatus 22 is used to: obtain an access control policy, and verify an access request according to the access control policy.

In still another possible example, the access request obtaining module 202 is implemented as a context manager (context manager). The context manager is configured to: receive an access request, and extract, from the access request, a target request attribute carried in the access request. The context manager may transfer the target request attribute to the authentication apparatus 22.

In still another possible example, the authentication module 203 includes a context manager. For example, the authentication module 203 is implemented as a policy decision point (Policy Decision Point, PDP) service and a context manager. The context manager is specifically configured to extract the target request attribute from the access request.

In still another possible example, the policy configuration module 201, the access request obtaining module 202, the authentication module 203, and the permission control module 204 are implemented as a same cloud service or virtual instance.

For the access management apparatus 21 and the authentication apparatus 22, the access management apparatus 21 has a plurality of possible implementations (or possible implementations as cloud services, or possible implementations as virtual instances). This is not limited in embodiments of this application. For example, the access management apparatus 21 includes identity and access management (Identity and Access Management, IAM). For another example, the access management apparatus 21 includes trusted execution environment-measurements (TEE environment measurements) and the like.

The authentication apparatus 22 has a plurality of possible implementations (or possible implementations as cloud services, or possible implementations as virtual instances). This is not limited in embodiments of this application. For example, the authentication apparatus 22 includes a policy decision point (Policy Decision Point, PDP) service. For another example, the authentication apparatus 22 includes access policy enforcement (access policy enforcement).

Optionally, the authentication apparatus 22 includes the context manager. For example, the authentication apparatus 22 and the context manager are implemented as a same cloud service or virtual instance.

The following describes a cloud computing technology-based access control method according to an embodiment of this application. FIG. 4 is a schematic flowchart of a cloud computing technology-based access control method according to an embodiment of this application. The cloud computing technology-based access control method according to an embodiment of this application includes the following steps.

S1: A cloud management platform obtains and records a first access control policy configured by an administrator, where the first access control policy includes a first request attribute.

In this embodiment, the cloud management platform may obtain and record the access control policy configured by the administrator. Specifically, configuration of the access control policy includes configuring at least one piece of request attribute information, where the request attribute information includes one or any combination of a request attribute, an expected value of the request attribute, or a matching manner of the request attribute. The expected value of the request attribute is used to match with a value of a target request attribute carried in an access request. A specific matching manner of matching the expected value of the request attribute with the value of the target request attribute is indicated by the matching manner of the request attribute.

For example, the configured access control policy is the first access control policy. Specifically, configuration of the first access control policy includes configuring at least one piece of first request attribute information, where the first request attribute information includes one or any combination of the first request attribute, an expected value of the first request attribute, and a matching manner of the first request attribute. The expected value of the first request attribute is used to match with the value of the target request attribute carried in the access request. A specific matching manner of matching the expected value of the first request attribute with the value of the target request attribute is indicated by the matching manner of the first request attribute.

Further, the cloud management platform may further configure a plurality of access control policies. For example, in addition to the first access control policy, the cloud management platform further configures a second access control policy. Specifically, the cloud management platform obtains and records a second access control policy configured by the administrator, where configuration of the second access control policy includes configuring at least one piece of second request attribute information, and the second request attribute information includes one or any combination of a second request attribute, an expected value of the second request attribute, and a matching manner of the second request attribute. The rest may be deduced by analogy. This is not limited in this application.

The access control policy may specifically include one or more fields: a field of a request attribute, a field of an expected value of the request attribute, a field of a value of the request attribute, a field of a matching manner, a field of an effect, and/or a field of a request type, where the field of the request attribute is used to identify a request attribute of an access request bound to the access control policy, the field of the expected value of the request attribute is used to match the expected value of the first request attribute with the value of the target request attribute, the field of the effect is used to identify whether the first access request is allowed or denied, and the field of the request type is used to identify a request type of the first access request. For example, the cloud management platform provides an interface for the administrator to configure the access control policy. The administrator may intuitively configure a plurality of fields of the access control policy on the interface, to implement a plurality of functions of the access control policy. This improves convenience of configuring an access control policy.

The following separately describes a request attribute, an expected value of the request attribute, and a matching manner of the request attribute that are included in the request attribute information.
1. The request attribute refers to various context request attributes associated with the access request.

In a possible example, the request attribute includes a related request attribute of an initiator of the access request. The request attribute includes identity information of a user who sends the access request. The request attribute includes but is not limited to an identity request attribute of the user who sends the access request, for example, an identity type, an account identifier (ID), an account name, or information about an organization to which an account belongs.

In a possible example, the request attribute includes a related request attribute of a target party (for example, a resource) of the access request. The request attribute includes a resource attribute. The request attribute includes but is not limited to: an identifier of a resource, a tag of the resource, an identifier of an organization to which the resource belongs, a location path of the resource in the organization, and the like.

In a possible example, the request attribute includes a request attribute related to a type of an operation performed by the access request on the resource. The request attribute includes but is not limited to: accessing a resource, reading a resource, storing a resource, invoking a resource, editing a resource, or the like.

In a possible example, the request attribute further includes another context request attribute related to the access request. For example, the request attribute includes address information of an initiator of the access request, for example, an internet protocol (Internet protocol, IP) address or a media access control (Media Access Control, MAC) address. For another example, the request attribute includes whether the access request is encrypted. The request attribute may further include a related request attribute of a request path through which the access request passes.

For example, the request attribute is shown in Table 1.

**Table 1**

| Attribute name | Attribute description |
|---|---|
| PrincipalAccount | Account ID of a request invoker |
| PrincipalUrn | Unique identifier of an invoker |
| PrincipalOrgID | ID of an organization to which an invoker belongs |
| PrincipalOrgPath | Location path of an invoker in an organization |
| PrincipalTag | Tag carried by an identity of an invoker |
| PrincipalType | Identity type of an invoker |
| MFAPresent | Whether multi-factor authentication on a current session identity of an invoker succeeds |
| UserId | IAM user ID of an invoker |
| UserAgent | Name of a client application that initiates a request |
| ResourceUrn | Unique identifier of a resource requested to be accessed |
| ResourceTag | Tag carried by a resource requested to be accessed |
| ResourceOrgID | ID of an organization to which a resource requested to be accessed belongs |
| ResourceOrgPath | Location path of a resource requested to be accessed in an organization |
| ResourceAccount | ID of an account to which a resource requested to be accessed belongs |
| SourceIp | Source IP address from which a request is initiated |
| SourceVpc | Source VPC from which a request is initiated |
| SourceVpce | VPC endpoint through which a request passes |
| VpcSourceIp | VPC Source IP address from which a request is initiated |
| ViaService | Whether a request is forwarded by a cloud service |
| CalledVia | Cloud service forwarding link of a request |
| SecureTransport | Whether a request is sent through an SSL |

In a possible example, the request attribute includes one or any combination of the request attributes in Table 1.

The request attribute may further include a request attribute customized by the cloud management platform. For example, a request attribute "sts:ExternalId" is an "ExternalId" parameter added by an access request "AssumeAgency API". This is not limited in embodiments of this application.

### 2. Expected value of the request attribute.

For the expected value of the request attribute, the request attribute "PrincipalOrgPath (Location path of an invoker in an organization)" is used as an example. The expected value of the request attribute may be configured as "Org-1/Root/OU-2/*", and request attribute information (for example, request attribute information #1) to which the request attribute belongs is bound to an access control policy ACP #1. This means that a location of the invoker (or a user who sends the access request) of the access request for which ACP #1 takes effect is "Org-1/Root/OU-2/*" in the organization. When a user of "Org-1/Root/OU-3/*" sends an access request #2, because a value of a request attribute "PrincipalOrgPath" of the access request #2 is "Org-1/Root/OU-3/*", and is inconsistent with the expected value "Org-1/Root/OU-2/*" of the request attribute "PrincipalOrgPath" of the request attribute information #1, the access request #2 does not meet a matching rule of the ACP #1, and the access request #2 cannot be verified according to the ACP #1. The ACP #1 does not take effect for the access request #2.

### 3. Matching manner of the request attribute.

For the matching manner of the request attribute, the matching manner of the request attribute indicates a matching manner (or referred to as a matching rule) between the value of the target request attribute and the expected value of the request attribute. For example, for the access control policy ACP #1, the request attribute information #1 is bound to the ACP #1, and the expected value of the request attribute "PrincipalOrgPath" in the request attribute information #1 is "Org-1/Root/OU-2/*". The matching manner of the request attribute is fuzzy string matching (StringLike). The matching manner means that when a string #1 (the value of the target request attribute of the access request) and a string #2 (the expected value of the request attribute of the access control policy) meet fuzzy matching, the access request meets the matching rule of the ACP #1, and the ACP #1 takes effect for the access request, the access request may be verified by using the ACP #1; or when the string #1 and the string #2 do not meet fuzzy matching, the access request does not meet the matching rule of the ACP #1, the ACP #1 does not take effect for the access request, and the access request cannot be verified according to the ACP #1.

For example, the matching manner includes any one or more of the following: fuzzy string matching, exact string matching, address range determining, and value comparison. In other words, a plurality of matching manners may be simultaneously configured for the access control policy. The target request attribute of the access request needs to meet all matching rules indicated by the plurality of matching manners configured for the access control policy, so that the access request can be verified according to the access control policy.

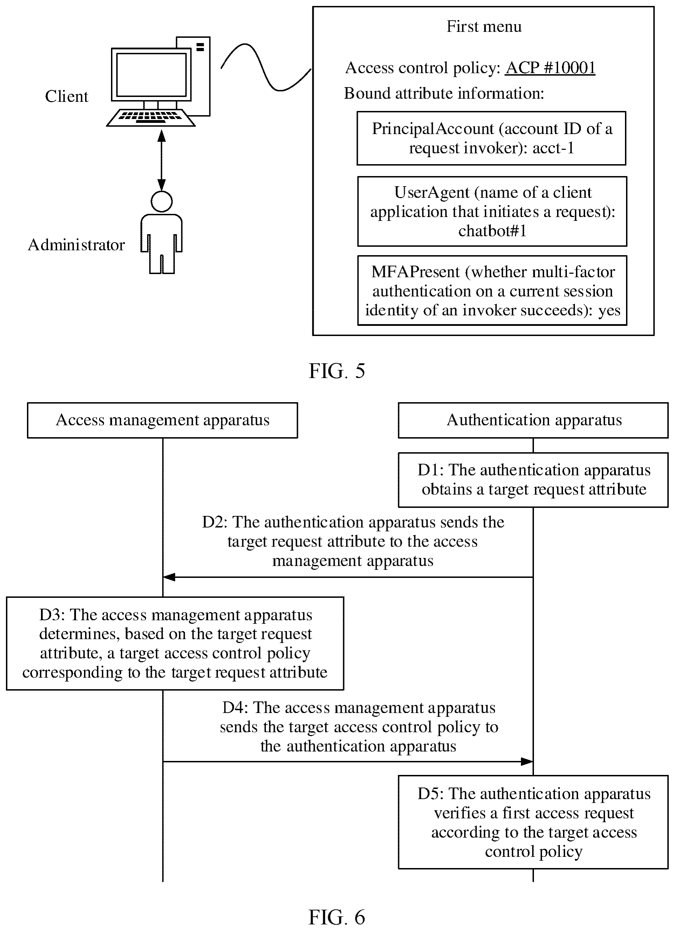

For the access control policy, a possible configuration manner is as follows: For example, the cloud management platform displays a first menu to the administrator through a client, where the first menu is used to configure a related item of the access control policy. For example, the first menu includes a related option for configuring a request attribute, and the request attribute is bound to the configured access control policy. FIG. 5 is a diagram of a configuration interface of a first menu according to an embodiment of this application. When a terminal device (for example, an administrator) needs to configure an access control policy, an access management apparatus may send a first menu to the terminal device. The first menu includes one or more options, and each option corresponds to one piece of request attribute information. The terminal device may select, based on the first menu, the request attribute information bound to the access control policy. Each option further includes a plurality of sub-options, and the sub-options are used to configure a request attribute included in the request attribute information, an expected value of the request attribute, and/or a matching manner of the request attribute.

Specifically, a client runs on the terminal device, and the access management apparatus sends the first menu to the client in response to a request configuration instruction of the client. The administrator obtains the first menu through the client, and determines the selected request attribute information from the first menu. In FIG. 5, an example in which an access control policy ACP #10001 is configured is used. The first menu provides a plurality of options for configuring request attribute information bound to the ACP #10001. The request attribute information bound to the ACP #10001 indicates that the access request verified by the ACP #10001 needs to include the following request attributes: PrincipalAccount (account ID of a request invoker): acct-1; UserAgent (name of a client application that initiates a request). chatbot#1; and MFAPresent (whether multi-factor authentication on a current session identity of an invoker succeeds): yes.

Further, the first menu may further include a configuration option of the expected value. After selecting, by using the first menu, the request attribute information bound to the access control policy, the terminal device may further configure the expected value of the request attribute in the request attribute information.

Further, the first menu may further include one or more options corresponding to the matching manner. In this way, the terminal device can select the matching manner of the request attribute in the request attribute information based on the first menu.

It should be noted that the request attribute provided in the first menu may be all request attributes that can be collected by the cloud management platform and that are obtained by the access management apparatus on the cloud management platform.

Further, the cloud management platform may create an access control policy according to the foregoing method. For example, an access control policy "ACP #1" is configured based on a configuration instruction from an administrator. The ACP #1 is bound to request attribute information #1, and the request attribute information #1 includes a request attribute "PrincipalAccount (account ID of a request invoker)" and a request attribute "ResourceUrn (unique identifier of a resource requested to be accessed)".

Further, the cloud management platform may further edit (or modify) an existing access control policy. For example, for the existing access control policy ACP #1, the ACP #1 is bound to the request attribute "PrincipalAccount (account ID of a request invoker)" and the request attribute "ResourceUrn (unique identifier of a resource requested to be accessed)". After receiving a configuration instruction related to "ACP #1", the cloud management platform modifies the request attribute bound to "ACP #1" to "ResourceTag (tag carried by a resource requested to be accessed)".

Further, after the cloud management platform obtains a plurality of registration requests that carry different user accounts, the cloud management platform may separately register and record the plurality of user accounts based on the plurality of registration requests. The plurality of user accounts include an account of the administrator. The cloud management platform allocates configuration permission of different access control policies to corresponding user accounts based on permission of the user accounts. For example, configuration permission of the first access control policy is assigned to the account of the administrator. In this way, personalized configuration and management of access control policy are implemented.

S2: The cloud management platform obtains a first access request triggered by a user, where the first access request carries a target request attribute.

In this embodiment, the cloud management platform obtains the first access request triggered by the user, where the first access request carries the target request attribute. For example, the user wants to access a resource through the client, and triggers an access request, and the cloud management platform obtains the access request.

In a possible implementation, a context manager in the cloud management platform obtains the target request attribute from the access request. After the context manager obtains the first access request triggered by the user, the context manager obtains all request attributes related to the first access request, and these request attributes are referred to as the target request attributes.

For example, the first access request may be an API access request.

S3: The cloud management platform detects whether the target request attribute matches the first request attribute, to obtain a first matching result.

In this embodiment, the cloud management platform determines, based on the target request attribute carried in the first access request, the access control policy used to match with the target request attribute from one or more access control policies recorded by the cloud management platform.

The first access control policy is used as an example. The cloud management platform detects whether the first request attribute in the first request attribute information included in the first access control policy matches the target request attribute, and by analogy, performs one-to-one matching between all request attributes included in the first access control policy and all target request attributes carried in the first access request. The cloud management platform determines, based on a matching result, whether to verify the first access request according to the first access control policy.

A specific matching manner is as follows: The cloud management platform extracts the target request attribute from the first access request. Then the cloud management platform matches the expected value of the first request attribute with a value of the target request attribute based on the matching manner of the first request attribute, to obtain the first matching result. A specific matching manner is determined by the matching rule of the request attribute in the access control policy and the expected value of the request attribute. The matching manner includes one or any combination of fuzzy string matching, exact string matching, address range determining, and value comparison.

If the matching result indicates that the matching succeeds, the first access request is further verified according to the first access control policy. For example, if the expected value of the first request attribute in the first access control policy and the value of the target request attribute carried in the first access request meet the matching rule of the first request attribute, it is considered that the first matching result is that the matching succeeds. After the matching succeeds, the cloud management platform considers that the first access request may be further verified according to the first access control policy, and determines, based on a verification result, whether to allow the first access request or deny the first access request. When the verification result indicates that the verification succeeds, the first access request is allowed; or when the verification result indicates that the verification fails, the first access request is denied. For further verification, for example, if the first access control policy indicates that a request of this type should be allowed when matching succeeds, the first access request is allowed; or if the first access control policy indicates that a request of this type should be denied when matching succeeds, the first access request is denied.

If the matching result indicates that the matching fails, the first access request is not verified according to the first access control policy. For example, if the expected value of the first request attribute in the first access control policy and the value of the target request attribute carried in the first access request do not meet the matching rule of the first request attribute, it is considered that the first matching result is that the matching fails. The cloud management platform continues to search for an access control policy that can be used to verify the first access request. If the cloud management platform fails to find the access control policy, it is considered that the cloud management platform has no access control policy that can be used to verify the first access request, and the first access request is denied.

Further, when the target request attribute of the first access request includes a plurality of request attributes, and a plurality of matching results between the plurality of request attributes included in the target request attribute and the access control policy all indicate that the matching succeeds, the first access request may be verified according to the access control policy. When one of the plurality of matching results indicates that the matching fails, the first access request cannot be verified according to the access control policy.

Further, when the cloud management platform verifies the first access request according to a plurality of access control policies, the cloud management platform needs to determine, based on a verification result corresponding to each access control policy, to allow or deny the first access request. Specifically, after receiving the first access request, the cloud management platform extracts the target request attribute included in the first access request. Then, matching is performed based on the target request attribute and according to the plurality of access control policies recorded by the cloud management platform, to obtain the plurality of matching results. The cloud management platform determines a plurality of access control policies whose matching results indicate that the matching succeeds, and then further verifies the first access request according to the plurality of access control policies (the matching results are the plurality of access control policies whose matching results indicate that the matching succeeds), to obtain a plurality of verification results respectively corresponding to the plurality of access control policies. When the verification results of the plurality of access control policies all indicate that the verification succeeds, the first access request is allowed. When any one or more of the verification results of the plurality of access control policies indicates that the verification fails, the first access request is denied.

For example, the first access control policy and the second access control policy are used as examples. The cloud management platform matches the target request attribute with the plurality of request attributes (for example, the first request attribute) included in the first access control policy, to obtain the first matching result. The cloud management platform matches the target request attribute with the plurality of request attributes (for example, the second request attribute) included in the second access control policy, to obtain the second matching result. Then, the cloud management platform determines, based on the first matching result, whether to verify the first access request according to the first access control policy; and determines, based on the second matching result, whether to verify the first access request according to the second access control policy. Specifically, when the first matching result indicates that the matching succeeds, the first access request is verified according to the first access control policy; or when the first matching result indicates that the matching fails, the first access request is not verified according to the first access control policy. When the second matching result indicates that the matching succeeds, the first access request is verified according to the second access control policy; or when the second matching result indicates that the matching fails, the first access request is not verified according to the second access control policy. If the first matching result indicates that the matching succeeds, and the second matching result indicates that the matching succeeds, the cloud management platform separately verifies the first access request according to the first access control policy and the second access control policy. The cloud management platform determines, based on the two verification results, whether to allow the first access request or deny the first access request. When the two verification results both indicate that the verification succeeds, the first access request is allowed; or when either or both of the two verification results indicate that the verification fails, the first access request is denied.

In this embodiment of this application, the request attribute information is bound to the access control policy. When a request attribute carried in the access request matches the request attribute information bound to the access control policy, the access request is verified according to the access control policy. In this way, the access control policy can be flexibly configured, so that the access control policy can adapt to complex and changeable scenarios. An effective condition of the access control policy is set to the request attribute. Therefore, the cloud management platform can conveniently and accurately index the access control policy that needs to take effect. In this way, efficiency of verifying the access request according to the access control policy is improved.

The following further describes how the cloud management platform obtains the access control policy used to match with the target request attribute. For ease of description, the access control policy used to match with the target request attribute is referred to as a target access control policy.

In a possible implementation, FIG. 6 is a schematic flowchart of determining a to-be-matched access control policy according to an embodiment of this application.

D1: An authentication apparatus obtains a target request attribute.

In this embodiment, the authentication apparatus on a cloud management platform obtains the target request attribute of a first access request by using a context manager on the cloud management platform. Specifically, after the context manager receives the first access request from a terminal device (a user), the context manager obtains all request attributes related to the first access request, and these request attributes are referred to as target request attributes. Then, the context manager sends the target request attribute (which may specifically include one or more target request attributes) to the authentication apparatus.

D2: The authentication apparatus sends the target request attribute to an access management apparatus.

In this embodiment, after the authentication apparatus obtains the target request attribute, the authentication apparatus needs to obtain an access control policy used to verify the first access request. For ease of description, the access control policy used to verify the first access request is referred to as a target access control policy. The target access control policy may include one or more access control policies. For example, the target access control policy includes a first access control policy and a second access control policy.

Specifically, the authentication apparatus sends the target request attribute to the access management apparatus, and the access management apparatus determines the target access control policy based on the target request attribute.

D3: The access management apparatus determines, based on the target request attribute, a target access control policy corresponding to the target request attribute.

In this embodiment, the access management apparatus determines, based on the target request attribute, the target access control policy from the one or more access control policies configured by the access management apparatus. Specifically, the target access control policy meets the following condition: A value of the target request attribute and an expected value of the request attribute included in the target access control policy meet a matching rule indicated by a matching manner of the request attribute in the target access control policy. In other words, a matching result between the request attribute included in the target access control policy and the target request attribute is that the matching succeeds.

D4: The access management apparatus sends the target access control policy to the authentication apparatus.

In this embodiment, after the access management apparatus determines the target access control policy, the access management apparatus sends the target access control policy to the authentication apparatus.

D5: The authentication apparatus verifies the first access request according to the target access control policy.

In this embodiment, the authentication apparatus verifies the first access request according to the target access control policy. The authentication apparatus determines, based on a verification result, whether to allow the first access request. Specifically, when the authentication apparatus successfully verifies the first access request according to the target access control policy, the first access request is allowed; or when the authentication apparatus fails to verify the first access request according to the target access control policy, the first access request is denied.

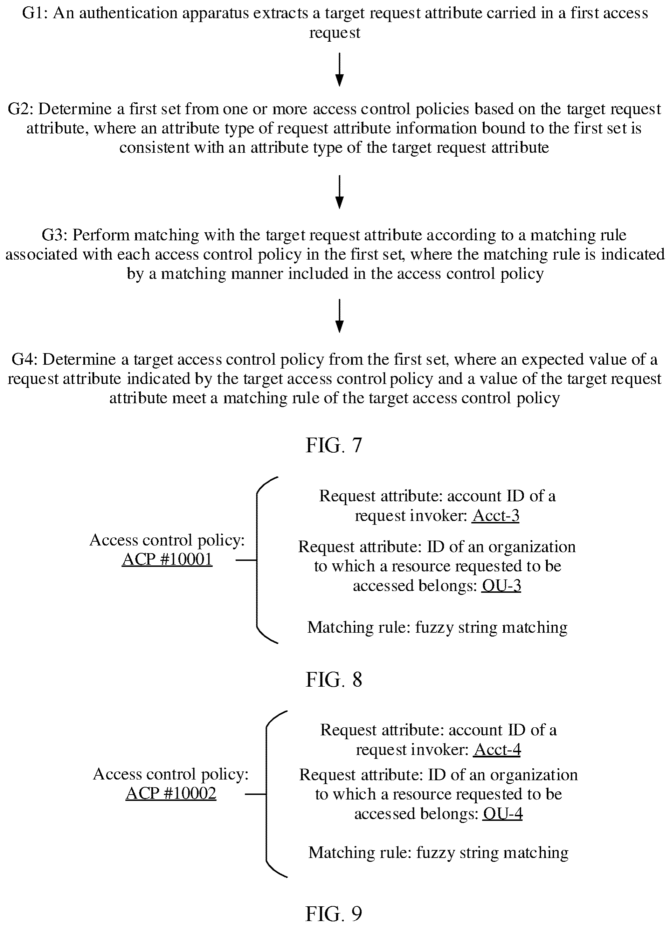

In still another possible implementation, a cloud management platform obtains, through screening based on a target request attribute, a first set from one or more access control policies recorded by the cloud management platform. An attribute type of request attribute information bound to the access control policy included in the first set is consistent with an attribute type of the target request attribute. Then, matching is further performed between the access control policy included in the first set and the target request attribute of a first access request, to obtain a matching result. Then, it is determined, based on the matching result, whether to verify the first access request according to the access control policy, to obtain a verification result. Finally, it is determined, based on the verification result, to allow or deny the first access request. For example, FIG. 7 shows a cloud computing technology-based access control method according to an embodiment of this application, and the method further includes the following steps.

G1: An authentication apparatus extracts a target request attribute carried in a first access request.

Step G1 is consistent with step S1, and details are not described herein again.

G2: Determine a first set from one or more access control policies based on the target request attribute, where an attribute type of request attribute information bound to the first set is consistent with an attribute type of the target request attribute.

In this embodiment, after the authentication apparatus obtains the target request attribute, the authentication apparatus selects the first set from the one or more configured access control policies. The attribute type of the request attribute information bound to the access control policy included in the first set is consistent with the attribute type of the target request attribute.

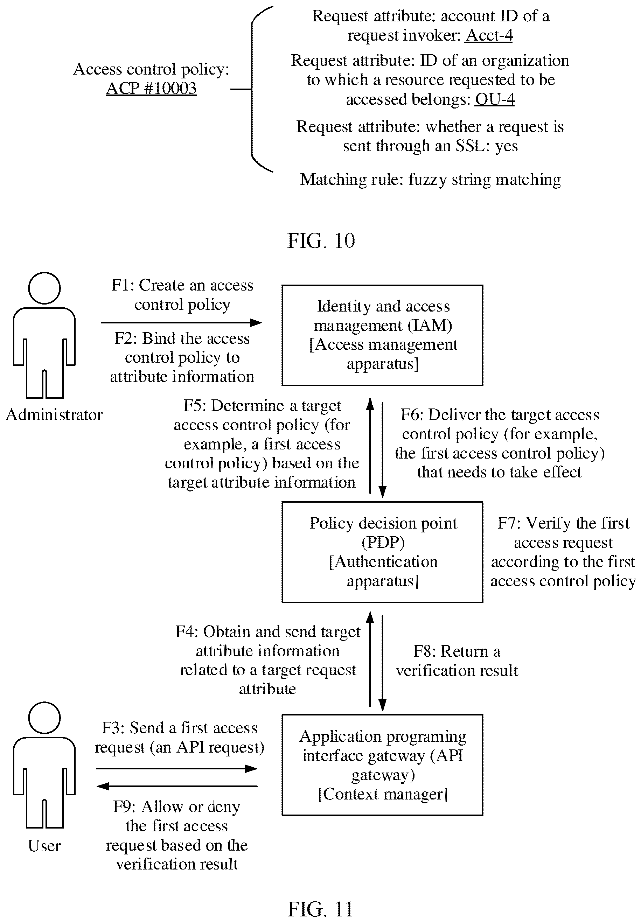

For example, an example in which the first set includes an ACP #10001, an ACP #10002, and an ACP #10003 is used for description. Refer to FIG. 8, FIG. 9, and FIG. 10. FIG. 8 is a diagram of an access control policy according to an embodiment of this application. FIG. 9 is a diagram of still another access control policy according to an embodiment of this application. FIG. 10 is a diagram of still another access control policy according to an embodiment of this application.

Request attribute information bound to the ACP #10001 is: an identity attribute: an account ID of a request invoker, and a resource attribute: an ID of an organization to which a resource requested to be accessed belongs. Request attribute information bound to the ACP #10002 is: an identity attribute: an account ID of a request invoker, and a resource attribute: an ID of an organization to which a resource requested to be accessed belongs. Request attribute information bound to the ACP #10003 is: an identity attribute: an account ID of a request invoker, a resource attribute: an ID of an organization to which a resource requested to be accessed belongs, and an environment attribute: whether a request is sent through an SSL.

The authentication apparatus obtains a target request attribute related to a first access request #1, where the target request attribute includes an identity attribute: an account ID of a request invoker, and a resource attribute: an ID of an organization to which a resource requested to be accessed belongs. The ACP #10001 and the ACP #10002 that are consistent with the attribute type of the target request attribute are determined from the ACP #10001, the ACP #10002, and the ACP # 1 0003 based on the attribute type of the target request attribute. The ACP #10001 and the ACP #10002 are used as the first set.

G3: Perform matching with the target request attribute according to a matching rule associated with each access control policy in the first set, where the matching rule is indicated by a matching manner included in the access control policy.

In this embodiment, the target request attribute is matched according to the matching rule associated with each access control policy in the first set and an expected value of the request attribute in each access control policy. Then, an access control policy that meets the matching rule is selected as a target access control policy. In other words, an access control policy whose matching result is that the matching succeeds is used as the target access control policy. The matching rule is indicated by the matching manner of the access control policy.

The ACP #10001 and the ACP #10002 shown in FIG. 8 and FIG. 9 are used as examples. A matching manner of the ACP #10001 is fuzzy string matching, and a matching manner of the ACP #10002 is fuzzy string matching. In the ACP #10001, an expected value of the request attribute information: an account ID of a request invoker is "Acct-3", and an expected value of the request attribute information: an ID of an organization to which a resource requested to be accessed belongs is "OU-3". In the ACP #10002, an expected value of the request attribute information: an account ID of a request invoker is "Acct-4", and an expected value of the request attribute information: an ID of an organization to which a resource requested to be accessed belongs is "OU-4". A value of a target request attribute related to the first access request #1 is obtained according to the matching rule "fuzzy string matching" indicated by the matching manner. The value of the target request attribute related to the first access request #1 includes an account ID "Acct-3" of a request invoker and an ID "OU-3" of an organization to which a resource requested to be accessed belongs. The value of the target request attribute is matched with an expected value of a request attribute of the ACP #10001, to determine whether fuzzy string matching is met. The value of the target request attribute is matched with an expected value of a request attribute of the ACP #10002, to determine whether fuzzy string matching is met.

G4: Determine the target access control policy from the first set, where an expected value of a request attribute indicated by the target access control policy and a value of the target request attribute meet a matching rule of the target access control policy.

For example, the ACP #10001 and the ACP #10002 shown in FIG. 8 and FIG. 9 are used as examples. The value of the target request attribute related to the first access request #1 includes an account ID "Acct-3" of a request invoker and an ID "OU-3" of an organization to which a resource requested to be accessed belongs. For the target request attribute, an access control policy that meets the matching rule is the ACP #10001. Therefore, the ACP #10001 is used as the target access control policy of the first access request #1. The ACP #10001 verifies the first access request #1. If the verification succeeds, the first access request #1 is allowed; or if the verification fails, the first access request #1 is denied.

In this embodiment of this application, the target access control policy is conveniently and accurately indexed based on the target request attribute associated with the first access request, so that authentication efficiency is effectively improved and user experience is improved.

With reference to the foregoing embodiments, the following describes an application scenario of embodiments of this application. FIG. 11 is a diagram of an application scenario according to an embodiment of this application. The application scenario includes an administrator (for example, a client), an IAM (used as an access management apparatus), a PDP (used as an authentication apparatus), an API gateway (used as a context manager), and a user (for example, a terminal device). The details are as follows:
F1: The administrator creates an access control policy by using the IAM.

Specifically, the administrator creates the access control policy through a client of the IAM, or edits and modifies the created access control policy.

F2: The administrator binds the access control policy to request attribute information by using the IAM.

Specifically, in a process of creating the access control policy, the access control policy is bound to the request attribute information by using the IAM. Alternatively, the request attribute information bound to the created access control policy is edited and modified.

Further, an expected value of a request attribute and a matching manner may be further configured for the access control policy.

F3: The user sends a first access request (an API request) to the API gateway.

F4: The PDP obtains and sends a target request attribute related to the first access request.

Specifically, the PDP obtains all request attribute information related to the first access request, and uses the request attribute information as the target request attribute.

F5: The PDP sends the target request attribute to the IAM, and the IAM determines a target access control policy based on the target request attribute. The target access control policy that takes effect is, for example, a first access control policy. In other words, a matching result between the first access control policy and the first access request is that the matching succeeds.

F6: The IAM delivers, to the PDP, the target access control policy that needs to take effect.

F7: The PDP verifies the first access request according to the target access control policy.

F8: The PDP returns a verification result to the API gateway.

F9: The API gateway allows or denies the first access request based on the verification result.

To implement the functions in the foregoing embodiments, the access management apparatus and the authentication apparatus include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by using hardware or hardware driven by computer software depends on a particular application scenario and design constraint of the technical solutions.

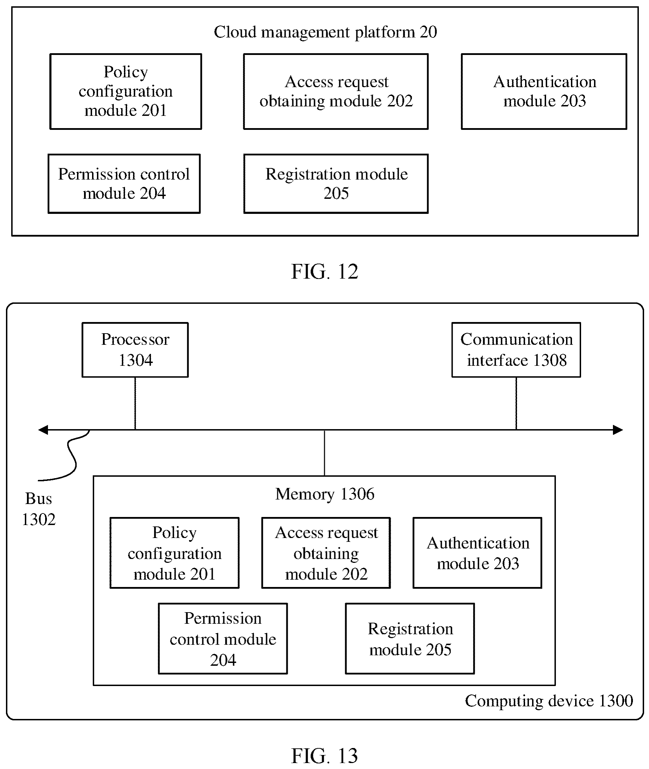

The following describes, with reference to the accompanying drawings, a cloud management platform provided in an embodiment of this application. FIG. 12 is a diagram of a structure of a cloud management platform 20 according to an embodiment of this application.

The cloud management platform 20 is used to manage an infrastructure, where the infrastructure includes at least one cloud data center, a plurality of servers are disposed in each cloud data center, and the cloud management platform 20 includes:
a policy configuration module 201, configured to obtain and record a first access control policy configured by an administrator, where configuration of the first access control policy includes configuring at least one piece of first request attribute information, and the first request attribute information includes one or any combination of a first request attribute, an expected value of the first request attribute, and a matching manner of the first request attribute;
an access request obtaining module 202, configured to obtain a first access request triggered by a user, where the first access request carries a target request attribute; and
an authentication module 203, configured to detect whether the target request attribute matches the first request attribute, to obtain a first matching result.

In a possible implementation, the cloud management platform 20 further includes:
a permission control module 204, configured to allow or deny the first access request based on the first matching result and the first access control policy recorded by the cloud management platform.

In a possible implementation, the policy configuration module 201 is configured to: obtain and record a second access control policy configured by the administrator, where configuration of the second access control policy includes configuring at least one piece of second request attribute information, and the second request attribute information includes one or any combination of a second request attribute, an expected value of the second request attribute, and a matching manner of the second request attribute.

The authentication module 203 is further configured to detect whether the target request attribute matches the second request attribute, to obtain a second matching result.

In a possible implementation, the permission control module 204 is further configured to: allow or deny the first access request based on the first matching result, the first access control policy recorded by the cloud management platform, the second matching result, and the second access control policy recorded by the cloud management platform.

In a possible implementation, the authentication module 203 is specifically configured to extract the target request attribute from the first access request.

The authentication module 203 is further configured to match the expected value of the first request attribute with a value of the target request attribute based on the matching manner of the first request attribute, to obtain the first matching result.

In a possible implementation, the matching manner includes one or any combination of fuzzy string matching, exact string matching, address range determining, and value comparison.

In a possible implementation, the first access control policy includes a field of a request attribute, a field of an expected value of the request attribute, a field of a value of the request attribute, a field of a matching manner, a field of an effect, and/or a field of a request type.

The field of the request attribute is used to identify a request attribute of the first access request.

The field of the expected value of the request attribute is used to match the expected value of the request attribute with the value of the request attribute.

The field of the effect is used to identify whether the first access request is allowed or denied.

The field of the request type is used to identify a request type of the first access request.

In a possible implementation, the request attribute includes one or any combination of a user identifier ID, a user identity, an ID of an organization to which the user belongs, a location path of the user in the organization, a tag carried by the user, a user identity type, whether multi-factor authentication on the user identity succeeds, an identity and access management identifier IAM ID of the user, a name of a client application of the user, an identifier of a resource requested to be accessed, an ID of an organization to which the resource requested to be accessed belongs, a location path of the resource requested to be accessed in the organization, an ID of an account to which the resource requested to be accessed belongs, a source internet protocol IP address of a request, a source virtual private cloud VPC of the request, a VPC endpoint through which the request passes, whether the request is forwarded by a cloud service, a cloud service forwarding link of the request, or whether the request is sent through a secure sockets layer SSL.

In a possible implementation, the cloud management platform 20 further includes:
a registration module 205, configured to obtain a plurality of registration requests that carry different user accounts.

The registration module 205 is further configured to: separately register and record a plurality of user accounts based on the plurality of registration requests, where the plurality of user accounts include an account of the administrator.

The registration module 205 is further configured to assign configuration permission of the first access control policy to the account of the administrator.

The policy configuration module 201, the access request obtaining module 202, the authentication module 203, the permission control module 204, and the registration module 205 may all be implemented by software, or may be implemented by hardware. For example, the following uses the policy configuration module 201 as an example to describe an implementation of the policy configuration module 201. Similarly, for implementations of the access request obtaining module 202, the authentication module 203, the permission control module 204, and the registration module 205, refer to the implementation of the policy configuration module 201.

A module is used as an example of a software functional unit, and the policy configuration module 201 may include code run on a computing instance. The computing instance may include at least one of a physical host (a computing device), a virtual machine, and a container. Further, there may be one or more computing instances. For example, the policy configuration module 201 may include code run on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

A module is used as an example of a hardware functional unit, and the policy configuration module 201 may include at least one computing device, such as a server. Alternatively, the policy configuration module 201 may be a device implemented by using an application-specific integrated circuit (application-specific integrated circuit, ASIC) or a programmable logic device (programmable logic device, PLD), or the like. The PLD may be implemented by a complex programmable logic device (complex programmable logical device, CPLD), a field-programmable gate array (field-programmable gate array, FPGA), generic array logic (generic array logic, GAL), or any combination thereof.

A plurality of computing devices included in the policy configuration module 201 may be distributed in a same region, or may be distributed in different regions. The plurality of computing devices included in the policy configuration module 201 may be distributed in a same AZ, or may be distributed in different AZs. Similarly, the plurality of computing devices included in the policy configuration module 201 may be distributed in a same VPC, or may be distributed in the plurality of VPCs. The plurality of computing devices may be any combination of computing devices such as a server, an ASIC, a PLD, a CPLD, an FPGA, and a GAL.

It should be noted that, in another embodiment, the policy configuration module 201 may be configured to perform any step in the cloud computing technology-based access control method, and the processing module may be configured to perform any step in the cloud computing technology-based access control method, the sending module may be configured to perform any step in the cloud computing technology-based access control method. Steps that the policy configuration module 201, the access request obtaining module 202, the authentication module 203, the permission control module 204, and the registration module 205 are responsible for implementing may be specified as required. The policy configuration module 201, the access request obtaining module 202, the authentication module 203, the permission control module 204, and the registration module 205 respectively implement different steps in the cloud computing technology-based access control method, to implement all functions of the access management apparatus.

With reference to FIG. 3, both the access management apparatus 21 and the authentication apparatus 22 may be implemented by software, or may be implemented by hardware. For example, the following describes an implementation of the access management apparatus 21. Similarly, for an implementation of the authentication apparatus 22, refer to the implementation of the access management apparatus 21.

A module is used as an example of a software functional unit, and the access management apparatus 21 may include code run on a computing instance. The computing instance may be at least one of computing devices such as a physical host (computing device), a virtual machine, and a container. Further, there may be one or more computing devices. For example, the access management apparatus 21 may include code run on a plurality of hosts/virtual machines/containers. It should be noted that the plurality of hosts/virtual machines/containers used to run the application may be distributed in a same region, or may be distributed in different regions. The plurality of hosts/virtual machines/containers used to run the code may be distributed in a same AZ, or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same VPC, or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

A module is used as an example of a hardware functional unit, and the access management apparatus 21 may include at least one computing device, such as a server. Alternatively, the access management apparatus 21 may be a device implemented by using an ASIC, a PLD, or the like. The PLD may be implemented by a CPLD, an FPGA, a GAL, or any combination thereof.

A plurality of computing devices included in the access management apparatus 21 may be distributed in a same region, or may be distributed in different regions. The plurality of computing devices included in the access management apparatus 21 may be distributed in a same AZ, or may be distributed in different AZs. Similarly, the plurality of computing devices included in the access management apparatus 21 may be distributed in a same VPC, or may be distributed in the plurality of VPCs. The plurality of computing devices may be any combination of computing devices such as a server, an ASIC, a PLD, a CPLD, an FPGA, and a GAL.

This application further provides a computing device 1300. As shown in FIG. 13, FIG. 13 is a diagram of a structure of a computing device 1300 according to an embodiment of this application. The computing device 1300 includes a bus 1302, a processor 1304, a memory 1306, and a communication interface 1308. The processor 1304, the memory 1306, and the communication interface 1308 communicate with each other through the bus 1302. The computing device 1300 may be a server or a terminal device. It should be understood that quantities of processors and memories in the computing device 1300 are not limited in this application.

The bus 1302 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. To facilitate representation, the bus is represented by using only one line in FIG. 13, but it does not indicate that there is only one bus or one type of buses. The bus 1302 may include a path for transmitting information between components (for example, the memory 1306, the processor 1304, and the communication interface 1308) of the computing device 1300.

The processor 1304 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1306 may include a volatile memory (volatile memory), for example, a random access memory (random access memory, RAM). The processor 1304 may further include a non-volatile memory (non-volatile memory), such as a read-only memory (read-only memory, ROM), a flash memory, a hard disk drive (hard disk drive, HDD), or a solid state drive (solid state drive, SSD).

The memory 1306 stores executable program code, and the processor 1304 executes the executable program code to separately implement functions of the policy configuration module, the access request obtaining module, the authentication module, the permission control module, and the registration module, to implement the cloud computing technology-based access control method. In other words, the memory 1306 stores instructions used to perform the cloud computing technology-based access control method.

Alternatively, the memory 1306 stores executable code, and the processor 1304 executes the executable code to separately implement functions of the access management apparatus and the authentication apparatus, to implement the cloud computing technology-based access control method. In other words, the memory 1306 stores instructions used to perform the cloud computing technology-based access control method.

The communication interface 1303 uses a transceiver module, for example, but not limited to, a network interface card or a transceiver, to implement communication between the computing device 1300 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

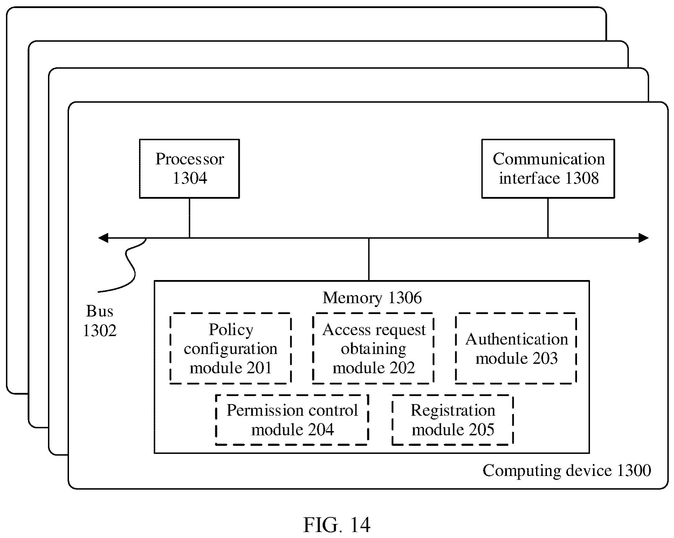

As shown in FIG. 14, FIG. 14 is a diagram of a structure of a computing device cluster according to an embodiment of this application. The computing device cluster includes at least one computing device 1300. A memory 1306 in one or more computing devices 1300 in the computing device cluster may store same instructions used to perform the cloud computing technology-based access control method.

In some possible implementations, memories 1306 of the one or more computing devices 1300 in the computing device cluster may alternatively separately store some instructions used to perform the cloud computing technology-based access control method. In other words, a combination of the one or more computing devices 1300 may jointly execute instructions used to perform the cloud computing technology-based access control method.

It should be noted that memories 1306 in different computing devices 1300 in the computing device cluster may store different instructions respectively used to perform some functions of the access management apparatus. In other words, instructions stored in the memories 1306 in different computing devices 1300 may implement functions of one or more of the policy configuration module 201, the access request obtaining module 202, the authentication module 203, the permission control module 204, and the registration module 205.

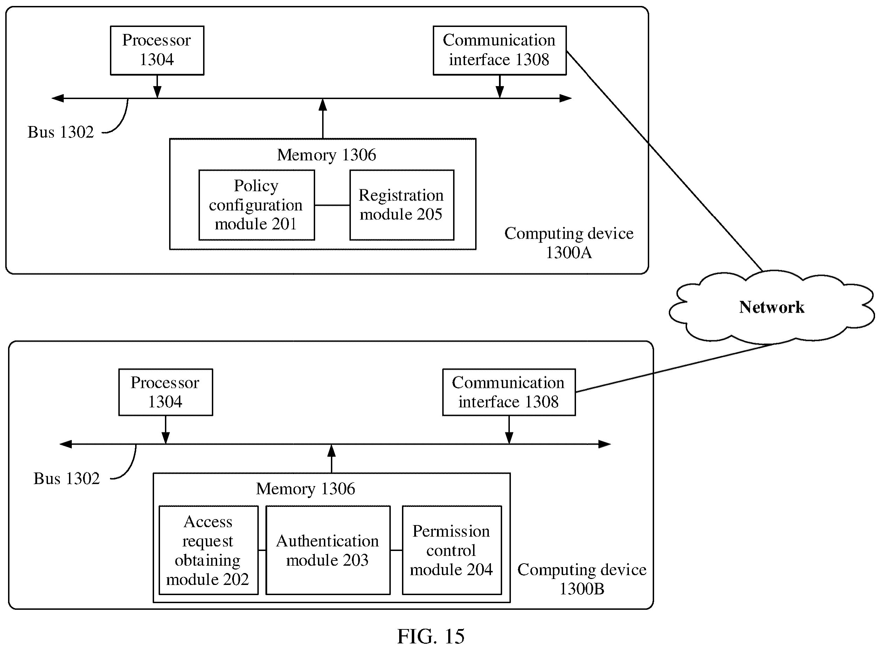

In some possible implementations, the one or more computing devices in the computing device cluster may be connected through a network. The network may be a wide area network, a local area network, or the like. FIG. 15 shows a possible implementation. As shown in FIG. 15, two computing devices 1300A and 1300B are connected through a network. Specifically, each computing device is connected to the network through a communication interface of the computing device. In this type of possible implementation, a memory 1306 in the computing device 1300A stores instructions used to perform functions of the policy configuration module 201 and the registration module 205. In addition, the memory 1306 in the computing device 1300B stores instructions used to perform functions of the access request obtaining module 202, the authentication module 203, and the permission control module 204.

For a connection manner between computing device clusters shown in FIG. 15, it may be considered that the cloud computing technology-based access control method provided in this application needs to process a large quantity of access requests. Therefore, it is considered that functions implemented by the access request obtaining module, the authentication module, and the registration module are performed by the computing device 1300B.

It should be understood that functions of the computing device 1300A shown in FIG. 15 may alternatively be completed by a plurality of computing devices 1300. Similarly, functions of the computing device 1300B may alternatively be completed by a plurality of computing devices 1300.

An embodiment of this application further provides another computing device cluster. For a connection relationship between computing devices in the computing device cluster, refer to the connection manner in the computing device cluster in FIG. 14 and FIG. 15 similarly. A difference lies in that a memory 1306 in one or more computing devices 1300 in the computing device cluster may store same instructions used to perform the cloud computing technology-based access control method.

In some possible implementations, memories 1306 of the one or more computing devices 1300 in the computing device cluster may alternatively separately store some instructions used to perform the cloud computing technology-based access control method. In other words, a combination of the one or more computing devices 1300 may jointly execute instructions used to perform the cloud computing technology-based access control method.

It should be noted that memories 1306 in different computing devices 1300 in the computing device cluster may store different instructions used to perform some functions of the cloud management platform. In other words, instructions stored in the memories 1306 in different computing devices 1300 may implement functions of one or more of the access management apparatus and the authentication apparatus.

An embodiment of this application further provides a computer program product including instructions. The computer program product may be a software or program product that includes instructions and that can be run on a computing device or stored in any usable medium. When the computer program product runs on at least one computing device, the at least one computing device is enabled to perform a cloud computing technology-based access control method or a cloud computing technology-based access control method.

An embodiment of this application further provides a computer-readable storage medium. The computer-readable storage medium may be any usable medium that can be stored by a computing device, or a data storage device like a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions indicate the computing device to perform the cloud computing technology-based access control method, or indicate the computing device to perform the cloud computing technology-based access control method.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. The processor and the storage medium may exist in a base station or terminal as discrete components.

All or some of the foregoing embodiments may be implemented through software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or some of the procedures or functions in embodiments of this application are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device integrating one or more usable media like a server or a data center. The usable medium may be a magnetic medium, for example, a floppy disk, a hard disk, or a magnetic tape, may be an optical medium, for example, a digital video disc, or may be a semiconductor medium, for example, a solid-state drive. The computer-readable storage medium may be a volatile or non-volatile storage medium, or may include both the volatile storage medium and the non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention.

## Claims

1. A cloud computing technology-based access control method, wherein the method is applied to a cloud management platform, the cloud management platform is used to manage an infrastructure, the infrastructure comprises at least one cloud data center, a plurality of servers are disposed in each cloud data center, and the method comprises:
obtaining and recording, by the cloud management platform, a first access control policy configured by an administrator, wherein configuration of the first access control policy comprises configuring at least one piece of first request attribute information, and the first request attribute information comprises one or any combination of a first request attribute, an expected value of the first request attribute, and a matching manner of the first request attribute;
obtaining, by the cloud management platform, a first access request triggered by a user, wherein the first access request carries a target request attribute; and
detecting, by the cloud management platform, whether the target request attribute matches the first request attribute, to obtain a first matching result.

2. The method according to claim 1, wherein the method further comprises:
allowing or denying, by the cloud management platform, the first access request based on the first matching result and the first access control policy recorded by the cloud management platform.

3. The method according to claim 1, wherein the method further comprises:
obtaining and recording, by the cloud management platform, a second access control policy configured by the administrator, wherein configuration of the second access control policy comprises configuring at least one piece of second request attribute information, and the second request attribute information comprises one or any combination of a second request attribute, an expected value of the second request attribute, and a matching manner of the second request attribute; and
detecting, by the cloud management platform, whether the target request attribute matches the second request attribute, to obtain a second matching result.

4. The method according to claim 3, wherein the method further comprises:
allowing or denying, by the cloud management platform, the first access request based on the first matching result, the first access control policy recorded by the cloud management platform, the second matching result, and the second access control policy recorded by the cloud management platform.

5. The method according to any one of claims 1 to 4, wherein detecting, by the cloud management platform, whether the target request attribute matches the first request attribute, to obtain the first matching result specifically comprises:
extracting, by the cloud management platform, the target request attribute from the first access request; and
matching, by the cloud management platform, the expected value of the first request attribute with a value of the target request attribute based on the matching manner of the first request attribute, to obtain the first matching result.

6. The method according to any one of claims 1 to 5, wherein the matching manner comprises one or any combination of fuzzy string matching, exact string matching, address range determining, and value comparison.

7. The method according to any one of claims 1 to 6, wherein the first access control policy comprises a field of a request attribute, a field of an expected value of the request attribute, a field of a value of the request attribute, a field of a matching manner, a field of an effect, and a field of a request type, wherein the field of the request attribute is used to identify a request attribute of the first access request, the field of the expected value of the request attribute is used to match the expected value of the request attribute with the value of the request attribute, the field of the effect is used to identify whether the first access request is allowed or denied, and the field of the request type is used to identify a request type of the first access request.

8. The method according to any one of claims 1 to 7, wherein the request attribute comprises one or any combination of a user identifier ID, a user identity, an ID of an organization to which the user belongs, a location path of the user in the organization, a tag carried by the user, a user identity type, whether multi-factor authentication on the user identity succeeds, an identity and access management identifier IAM ID of the user, a name of a client application of the user, an identifier of a resource requested to be accessed, an ID of an organization to which the resource requested to be accessed belongs, a location path of the resource requested to be accessed in the organization, an ID of an account to which the resource requested to be accessed belongs, a source internet protocol IP address of a request, a source virtual private cloud VPC of the request, a VPC endpoint through which the request passes, whether the request is forwarded by a cloud service, a cloud service forwarding link of the request, or whether the request is sent through a secure sockets layer SSL.

9. The method according to any one of claims 1 to 8, wherein before obtaining and recording, by the cloud management platform, the first access control policy configured by the administrator, the method further comprises:
obtaining, by the cloud management platform, a plurality of registration requests that carry different user accounts;
separately registering and recording, by the cloud management platform, a plurality of user accounts based on the plurality of registration requests, wherein the plurality of user accounts comprise an account of the administrator; and
assigning, by the cloud management platform, configuration permission of the first access control policy to the account of the administrator.

10. A cloud management platform, wherein the cloud management platform is used to manage an infrastructure, the infrastructure comprises at least one cloud data center, a plurality of servers are disposed in each cloud data center, and the cloud management platform comprises:
a policy configuration module, configured to obtain and record a first access control policy configured by an administrator, wherein configuration of the first access control policy comprises configuring at least one piece of first request attribute information, and the first request attribute information comprises one or any combination of the first request attribute, an expected value of the first request attribute, and a matching manner of the first request attribute;
an access request obtaining module, configured to obtain a first access request triggered by a user, wherein the first access request carries a target request attribute; and
an authentication module, configured to detect whether the target request attribute matches the first request attribute, to obtain a first matching result.

11. The cloud management platform according to claim 10, wherein the cloud management platform further comprises:
a permission control module, configured to allow or deny the first access request based on the first matching result and the first access control policy recorded by the cloud management platform.

12. The cloud management platform according to claim 10, wherein
the policy configuration module is configured to: obtain and record a second access control policy configured by the administrator, wherein configuration of the second access control policy comprises configuring at least one piece of second request attribute information, and the second request attribute information comprises one or any combination of the second request attribute, an expected value of the second request attribute, and a matching manner of the second request attribute; and
the authentication module is further configured to detect whether the target request attribute matches the second request attribute, to obtain a second matching result.

13. The cloud management platform according to claim 12, wherein
the permission control module is further configured to: allow or deny the first access request based on the first matching result, the first access control policy recorded by the cloud management platform, the second matching result, and the second access control policy recorded by the cloud management platform.

14. The cloud management platform according to any one of claims 10 to 13, wherein
the authentication module is specifically configured to extract the target request attribute from the first access request; and
the authentication module is further configured to match the expected value of the first request attribute with a value of the target request attribute based on the matching manner of the first request attribute, to obtain the first matching result.

15. The cloud management platform according to any one of claims 10 to 14, wherein the matching manner comprises one or any combination of fuzzy string matching, full string matching, address range determining, and value comparison.

16. The cloud management platform according to any one of claims 10 to 15, wherein
the first access control policy comprises a field of a request attribute, a field of an expected value of the request attribute, a field of a value of the request attribute, a field of a matching manner, a field of an effect, and a field of a request type, wherein the field of the request attribute is used to identify a request attribute of the first access request, the field of the expected value of the request attribute is used to match the expected value of the request attribute with the value of the request attribute, the field of the effect is used to identify whether the first access request is allowed or denied, and the field of the request type is used to identify a request type of the first access request.

17. The cloud management platform according to any one of claims 10 to 16, wherein the request attribute comprises one or any combination of a user identifier ID, a user identity, an ID of an organization to which the user belongs, a location path of the user in the organization, a tag carried by the user, a user identity type, whether multi-factor authentication on the user identity succeeds, an identity and access management identifier IAM ID of the user, a name of a client application of the user, an identifier of a resource requested to be accessed, an ID of an organization to which the resource requested to be accessed belongs, a location path of the resource requested to be accessed in the organization, an ID of an account to which the resource requested to be accessed belongs, a source internet protocol IP address of a request, a source virtual private cloud VPC of the request, a VPC endpoint through which the request passes, whether the request is forwarded by a cloud service, a cloud service forwarding link of the request, or whether the request is sent through a secure sockets layer SSL.

18. The cloud management platform according to any one of claims 10 to 17, wherein the cloud management platform further comprises:
a registration module, configured to obtain a plurality of registration requests that carry different user accounts, wherein
the registration module is further configured to: separately register and record a plurality of user accounts based on the plurality of registration requests, wherein the plurality of user accounts comprise an account of the administrator; and
the registration module is further configured to assign configuration permission of the first access control policy to the account of the administrator.

19. A computing device cluster, comprising at least one computing device, wherein each computing device comprises a processor and a memory; and
the processor in the at least one computing device is used to execute instructions stored in the memory in the at least one computing device, to enable the computing device cluster to perform the method according to any one of claims 1 to 9.

20. A computer program product comprising instructions, wherein when the instructions are run by a computing device cluster, the computing device cluster is enabled to perform the method according to any one of claims 1 to 9.

21. A computer-readable storage medium, comprising computer program instructions, wherein when the computer program instructions are executed by a computing device cluster, the computing device cluster is enabled to perform the method according to any one of claims 1 to 9.
